# EUROPÄISCHE PATENTSCHRIFT

(11) **EP 2 617 684 B1**
(45) Veröffentlichungstag und Bekanntmachung des Hinweises auf die Patenterteilung: **11.05.2016**
(21) Anmeldenummer: 13151256.8
(22) Anmeldetag: 15.01.2013
(51) Int. Cl.: C02F 1/00, C02F 1/28, C04B 30/00, E01C 5/00

(54) **Flächenbelag und zugehöriges Fugenmaterial**
Surface coating and associated joint material
Revêtement de surface et matériel de joint correspondant

(30) Priorität: 18.01.2012 DE 102012100381; 25.01.2012 DE 102012100616
(43) Veröffentlichungstag der Anmeldung: 24.07.2013
(73) Patentinhaber: Heinrich Klostermann GmbH & Co. KG, 48653 Coesfeld (DE)
(72) Erfinder: Dierkes, Carsten, Dr.-Ing., 48155 Münster (DE); Goosensen, Helmig, 8252 CK Dronten (NL); Kiffmeyer, Bernd, 48653 Coesfeld (DE)
(74) Vertreter: Glück Kritzenberger Patentanwälte PartGmbB

(56) Entgegenhaltungen:
- WO-A1-2010/139471
- DE-U1-202004 021 768
- DE-U1-202008 001 836
- DE-U1-202009 004 848

## Beschreibung

Die Erfindung betrifft einen Flächenbelag und ein zugehöriges Fugenmaterial gemäß dem Oberbegriff der Patentansprüche 1 und 11.

Flächenbeläge umfassend eine Vielzahl von im Verbund auf einer Bettungsschicht verlegten Formsteinen aus einem zementartigen Material, insbesondere aus Beton sind hinreichend aus dem Stand der Technik bekannt.

Die Versickerung des auf die Oberfläche eines derartigen Flächenbelages auftreffenden Niederschlagswassers erfolgt im Wesentlichen auf zwei Wegen, und zwar über die Fugen und/oder über den zur Herstellung des Flächenbelages verwendeten Formstein aus Beton an sich.

Bei Verwendung von herkömmlichen wasserundurchlässigen Formsteinen aus Beton erfolgt die Versickerung von Niederschlagswasser ausschließlich über die Fugen. Damit Niederschlagswasser durch die Fuge gelangen kann, sind diese ausreichend breit zu wählen und/oder mit einem sehr grobkörnigen Fugenmaterial zu füllen. In beiden Fällen ist die eigentliche Stabilisierungsfunktion der Fuge beeinträchtigt, was zu Schäden am Verband führen kann. Grobe Fugenmaterialien haben außerdem den Nachteil, dass sie nahezu keinen Schadstoffrückhalt bereitstellen, da dieser von der inneren Oberfläche des Materials abhängig ist.

Alternativ können aus einem haufwerksporigen Beton hergestellte Formsteine zur Erstellung des Flächenbelages Verwendung finden, d.h. zusätzlich zur Versickerung über die Fugen ist auch eine Versickerung des Niederschlagswassers über den Formstein an sich möglich. Nachteilig ist die Oberfläche derartiger Formsteine aufgrund der offenporigen Ausgestaltung nicht beliebig gestaltbar. Darüber hinaus bestehen Einschränkungen im Hinblick auf die Festigkeit und die Tausalzbeständigkeit derartiger haufwerksporiger Formsteine, und zwar kann es aufgrund der offenporigen Struktur zu salzbedingten Sprengungen der Textur, insbesondere bei Frost auch zur Beschädigung des jeweiligen Formsteins kommen.

Aufgrund der bestehenden gesetzlichen Anforderungen an eine nachhaltige Regenwasserbewirtschaftung kommt der Reinigung des Niederschlagswassers vor der Zuführung an das Grundwasser eine immer größere Bedeutung zu. Zur Vermeidung einer Verunreinigung des Grundwassers sind insbesondere Flächenbeläge wüschenswert, die zum Reinigen von mit Schadstoffen wie Mineralölen oder Schwermetallen belasteten Niederschlagswasserabflüssen ausgebildet sind. Insbesondere bei Verkehrsflächen wird das Niederschlagswasser bedingt durch Brems- und Reifenabrieb sowie Tropfverlusten der Kraftfahrzeuge häufig mit Schwermetallen und Kohlenwasserstoffen versetzt, die das Grundwasser stark verunreinigen können.

Ferner sind natürliche und künstliche Molekularsiebe in der Form von natürlichen und künstlichen Zeolithen bekannt, welche ein hohes Adsorptionsvermögen insbesondere für gelöste Stoffe einer bestimmten Molekülgröße aufweisen. Durch eine geeignete Wahl eines Molekularsiebes können Moleküle einer bestimmten Molekülgröße beispielsweise aus Niederschlagswasser ausgefiltert werden. Derartige Molekularsiebe weisen eine große innere Oberfläche und einen einheitlichen Porendurchmesser auf, der in der Größenordnung der Durchmesser der zu adsorbierenden Moleküle liegt. Der Porendurchmesser wird hierbei häufig in der Einheit Ängström (Ä) angegeben, wobei 3 Å = 0,3 nm entsprechen.

Aus der DE 20 2009 004 848 U1 ist ein befahrbarer Bodenbelag mit Pflastersteinen und mit zwischen den Pflastersteinen verlaufenden Fugen bekannt. Zwischen den Fugen ist ein Fugenmaterial vorgesehen, das als biologisch wirksames, den Abbau von straßenverkehrstypischen Schadstoffen ermöglichendes Substrat ausgestaltet ist, wobei das Substrat Hartkörperchen aus hartem, druckstabilem Material enthält, deren Oberfläche mit einer biologisch wirksamen Beschichtung versehen sind. Zwischen den Hartkörperchen des Fugenmaterials sind Freiräume vorgesehen.

Ferner ist der WO2010/139471 A1 eine Filtervorrichtung zum Reinigen von mit Feststoffpartikeln und/oder gelösten Schadstoffen belastetem Wasser zu entnehmen, die ein Gehäuse, wenigstens einen Zulauf für verunreinigtes Wasser und wenigstens einen oberhalb des Zulaufs angeordneten Ablauf für gereinigtes Wasser aufweist. Im Gehäuse ist zwischen Zu- und Ablauf in Strömungsrichtung des Wassers eine Filtereinheit angeordnet, die von dem zu reinigenden Wasser durchströmt wird, wobei die Filtereinheit einen Ionenaustauscher enthält, der als synthetisches Molekularsieb ausgebildet ist.

Aufgabe der Erfindung ist es, einen Flächenbelag und ein zugehöriges Fugenmaterial anzugeben, welcher bzw. welches die Nachteile des Standes der Technik beseitigt, insbesondere eine Verschmutzung oder Kontaminierung des Untergrundes und/oder des Grundwassers durch Fremd- oder Schadstoffe effektiv zu verhindern. Die Aufgabe wird ausgehend von den Merkmalen des Oberbegriffes des Patentanspruches 1 und 11 jeweils durch dessen kennzeichnende Merkmale gelöst.

Der wesentlich Aspekt des erfindungsgemäßen Flächenbelages ist darin zu sehen, dass das zur Herstellung des Flächenbelages verwendete Fugenmaterial eine Filterschicht zur Entfernung von Schadstoffen aus den Niederschlagswasserabflüssen bildet und aus einem Gemisch aus einem sandartigen Anteil, einem Feinanteil und einem künstlichen Molekularsieb besteht, wobei der Volumenanteil des künstlichen Molekularsiebes bezogen auf das Gesamtvolumen des Gemisches zwischen 2% und 10% beträgt. Besonders vorteilhaft werden durch die erfindungsgemäße Zusammensetzung des Fugenmaterials die über die Fuge versickernden Niederschlagsabflüsse mittels des künstlichen Molekularsiebes von Schadstoffen befreit, wobei ein Lastabtrag des Flächenbelages durch den sandartigen Materialanteil als Stützkorn mit ein geringen Feinanteil weiterhin gewährleistet ist. Weiterhin vorteilhaft ist das erfindungsgemäße Fugenmaterial gleichmäßig durchströmbar, der vorgeschlagene Volumenanteil des künstlichen Molekularsiebes ermöglicht einen ausreichend Rückhalt der im Niederschlagsabfluss gelösten Schadstoffe und das Fugenmaterial ist nach einem Verblocken leicht austauchbar.

Weiterhin vorteilhaft beträgt der Volumenanteil des Feinanteils bezogen auf das Gesamtvolumen des Gemisches zwischen 1 % und 4%, vorzugsweise 2% bis 4%, wobei als Feinteil vorzugsweise Quarzmehl mit einer Korngröße zwischen 0,001 mm und 0,2 mm Verwendung findet. Der sandartige Materialanteil weist eine Korngröße zwischen 0,5 mm und 2 mm auf und ist vorzugsweise durch Granit gebildet. Durch die beschriebene Zusammensetzung des Fugenmaterials ist eine ausreichende Stabilität der Fuge unter Berücksichtigung einer Fugenbreite von 4 mm bis 8 mm gewährleistet. In einer besonders bevorzugten Ausführungsform beträgt der Volumenanteil des sandartigen Materialanteils 92 %, der Volumenanteil des Feinanteils 3% und der Volumenanteil des künstlichen Molekularsiebes 5 % jeweils bezogen auf das Gesamtvolumen des Gemisches.

Besonders vorteilhaft weist das künstliche Molekularsieb eine Korngröße von 1,8 mm bis 2,3 mm aufweist, wobei das künstliche Molekularsieb einen Porendurchmesser von 4 Ä, 5 Å oder 10 Ä besitzt. Das künstliche Molekularsieb ist vorzugsweise aus einem Material mit der Bezeichnung 13X und der chemischen Zusammensetzung Na2O · Al2O3 · 2.5 SiO2 · n H2O hergestellt. Alternativ kann das künstliche Molekularsieb aus einem Material mit der Bezeichnung 4A und der chemischen Zusammensetzung Na2O · Al2O3 · 2 SiO2 · n H2O oder aus einem Material mit der Bezeichnung 5A und der chemischen Zusammensetzung 0.7 CaO · 0.3 Na2O · Al2O3 · 2 SiO2 · n H2O hergestellt sein.

Die Bettungsschicht ist in einer bevorzugten Ausführungsform gegenüber dem Filtermaterial filterstabil ausgebildet. Beispielsweise kann die Bettungsschicht aus einem Materialgemisch mit einer Korngröße zwischen 0 mm und 5 mm hergestellt sein, wobei das Materialgemisch einen Feinanteil mit einer Korngröße von 0,63 mm aufweist, der bezogen auf das Gesamtvolumen des Materialgemisches einen Volumenanteil von höchstens 3% aufweist.

Weiterhin vorteilhaft sind die Formsteine zweischichtig ausgebildet und weisen eine wasserundurchlässige Vorsatzbetonschicht und eine daran anschließende wasserdurchlässige Kernbetonschicht auf, wobei die wasserdurchlässige Kernbetonschicht vorzugsweise aus haufwerksporigen Beton hergestellt ist. Die Versickerung findet hierbei im Bereich der Vorsatzbetonschicht zunächst ausschließlich über die Fuge und im Anschluss an die Vorsatzbetonschicht flächig über die wasserdurchlässige Kernbetonschicht in Richtung der Bettungsschicht statt.

Ferner ist Gegenstand der vorliegenden Erfindung ein Fugenmaterial zum Verfugen eines Flächenbelages umfassend eine Vielzahl von im Verbund auf einer Bettungsschicht verlegten Formsteinen aus Beton, welches besonders vorteilhaft aus einem Gemisch aus einem sandartigen Anteil, einem Feinanteil und einem künstlichen Molekularsieb gebildet ist, wobei der Volumenanteil des künstlichen Molekularsiebes bezogen auf das Gesamtvolumen des Gemisches zwischen 2% und 10% beträgt. Das erfindungsgemäße Fugenmaterial kann zur Herstellung von Flächenbelägen Verwendung finden, bei denen zumindest ein oberflächennahes Versickern des Niederschlagswasserabflusses über die Fuge erfolgt und eine Reinigung des Niederschlagswasserabflusses von Schadstoffen gewünscht ist. Das erfindungsgemäße Fugenmaterial ist schnell und einfach beispielsweise in einem Hochleistungs-Zwangsmischer durch Mischen herstellbar, wobei die Mischung im trockenen Zustand stattfindet.

Der Volumenanteil des Feinanteils bezogen auf das Gesamtvolumen des Gemisches beträgt zwischen 1 % und 4%, vorzugsweise 2% bis 4%, wobei als Feinanteil vorzugsweise Quarzmehl mit einer Korngröße zwischen 0,001 mm und 0,2 mm Verwendung findet. Der vorzugsweise durch Granit gebildete sandartige Materialanteil weist eine Korngröße zwischen 0,5 mm und 2 mm auf. Besonders gute Ergebnisse werden mit einem Fugenmaterial erreicht, bei dem der Volumenanteil des sandartigen Materialanteil 92 %, der Volumenanteil des Feinanteils 3 % und der Volumenanteil des künstlichen Molekularsiebes 5 % jeweils bezogen auf das Gesamtvolumen des Gemisches beträgt.

Das zur Herstellung des Fugenmaterials verwendete künstliche Molekularsieb weist eine Korngröße von 1,8 mm bis 2,3 mm und einen Porendurchmesser von 4 Ä, 5 Å oder 10 Å auf. Vorzugsweise wird das künstliche Molekularsieb aus einem Material mit der Bezeichnung 13X und der chemischen Zusammensetzung Na2O · Al2O3 · 2.5 SiO2 · n H2O hergestellt. Alternativ kann das künstliche Molekularsieb aus einem Material mit der Bezeichnung 4A und der chemischen Zusammensetzung Na2O · Al2O3 · 2 SiO2 · n H2O oder aus einem Material mit der Bezeichnung 5A und der chemischen Zusammensetzung 0.7 CaO · 0.3 Na2O · Al2O3 · 2 SiO2 · n H2O hergestellt werden.

Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen und/oder deren Rückbeziehung. Auch wird der Inhalt der Ansprüche zu einem Bestandteil der Beschreibung gemacht. Es zeigen:
- Fig. 1: beispielhaft in vereinfachter Darstellung einen vertikalen Schnitt durch einen erfindungsgemäßen Flächenbelag hergestellt durch Pflastern unter Verwendung einer Vielzahl von Formsteinen aus Beton und
- Fig. 2: beispielhaft eine alternative Ausführungsform des erfindungsgemäßen Flächenbelag gemäß Figur 1 hergestellt durch Pflastern unter Verwendung einer Vielzahl von zweischichtigen Formsteinen aus Beton unterschiedlicher Wasserdurchlässigkeit.

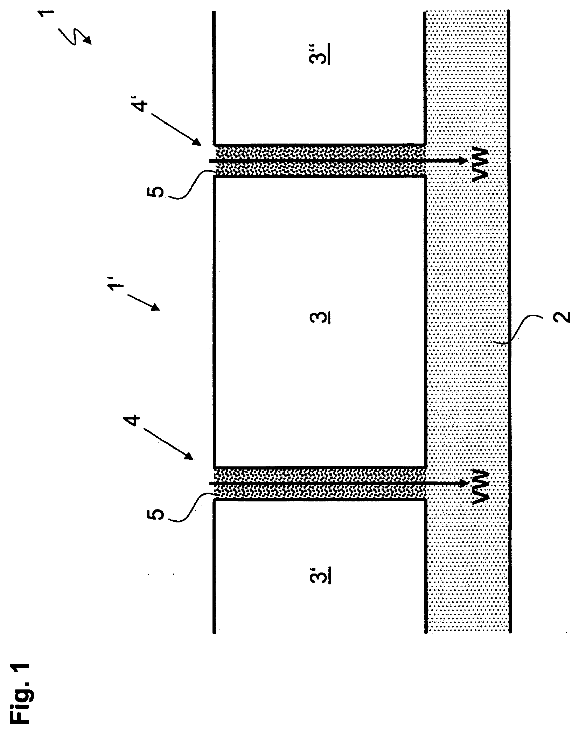

In Figur 1 ist beispielhaft anhand einer schematischen Zeichnung ein vertikaler Schnitt durch einen erfindungsgemäßen wasserdurchlässiger Flächenbelag 1 dargestellt.

Der Flächenbelag 1 ist aus einer Vielzahl von im Verbund auf einer Bettungsschicht 2 verlegten Formsteinen 3, 3', 3" aus Beton durch Pflastern hergestellt, wobei einander benachbarte Formsteine 3, 3', 3" Fugen 4, 4' ausbilden, die mit einem vorzugsweise sandartigen Fugenmaterial 5 gefüllt sind und einen Versickerungsweg VW zum Ableiten von Niederschlagswasserabflüssen von der Oberfläche 1' des Flächenbelages 1 in die Bettungsschicht 2 bereitstellen.

Die Bettungsschicht 2 ist gegenüber dem Fugenmaterial 5 filterstabil ausgebildet und bevorzugt aus einem Materialgemisch mit einer Korngröße von 0 bis 5mm hergestellt, wobei das Materialgemisch einen Feinanteil mit einer Korngröße kleiner 0,63 mm aufweist, der einen Volumenanteil bezogen auf das Gesamtvolumen des Materialgemisches von höchstens 3 % beträgt.

Unter einem Flächenbelag im Sinne der Erfindung wird eine begehbare und/oder befahrbare gepflasterte Fläche verstanden, welche im Wesentlichen dadurch erstellt ist, dass auf der Bettungsschicht 2 aus einem geeigneten Material Formsteine 3, 3', 3" aus einem zementgebunden Material, vorzugsweise aus Beton in Fuge 4, 4' verlegt werden und anschließend die Fugen 4, 4' in an sich bekannter Weise mit dem Fugenmaterial 5 gefüllt werden. Die Breite der Fugen 4, 4' beträgt vorzugsweise zwischen 4 mm und 8 mm.

Die Formsteine 3, 3', 3" sind vorzugsweise quaderförmig ausgebildet und weisen eine Oberseite, eine Unterseite und mehrere Umfangsseiten auf. Die Oberfläche 1' des Flächenbelages 1 wird hierbei durch die Oberseiten der im Verbund verlegten Formsteine 3, 3', 3" gebildet, wobei die Formsteine 3, 3', 3" mit ihrer jeweiligen Unterseite auf der Bettungsschicht 2 aufliegen.

Das Fugenmaterial 5 wird nach Verlegen der Formsteine 3, 3', 3" trocken in die Fugen 4, 4' eingefegt. Im Anschluss daran wird der Flächenbelag 1 abgerüttelt und nochmals nachverfugt. Nach einem Zeitraum von ca. 2 Wochen sind die Fugen 4, 4' zu kontrollieren und ggf. erneut nachzufugen.

In einer ersten in Figur 1 dargestellten Ausführungsvariante sind die zur Herstellung des Flächenbelages 1 verwendeten Formsteine 3, 3', 3" aus einem wasserundurchlässigen Beton hergestellt, d.h. die Versicherung von Niederschlagsabflüssen erfolgt ausschließlich über die Fugen 4, 4'.

Erfindungsgemäß bildet das Fugenmaterial 5 eine Filterschicht zur Entfernung von Schadstoffen aus dem Niederschlagswasserabflüssen aus und besteht aus einem Gemisch aus einem sandartigen Anteil, einem Feinanteil und einem künstlichen Molekularsieb, wobei der Volumenanteil des künstlichen Molekularsiebes bezogen auf das Gesamtvolumen des Gemisches zwischen 2% und 10% beträgt. Hierbei weist das künstliche Molekularsieb vorzugsweise eine Korngröße von 1,8 mm bis 2,3 mm auf.

In einer bevorzugten Ausführungsvariante beträgt der Volumenanteil des künstlichen Molekularsiebes bezogen auf das Gesamtvolumen des Gemisches zwischen 4% und 6%. Das künstliche Molekularsieb weist beispielsweise ein Porendurchmessern bzw. Porenweiten zwischen 3 Ä und 10 Å, vorzugsweise 4 Å, 5 Å oder 10 Å auf. Der Porendurchmessern bzw. die Porenweite ist hierbei auf die Größe der zu adsorbierenden Schadstoffteile abgestimmt.

Künstliche Molekularsiebe in Form von künstlichen Zeolithen weisen im Vergleich zu natürlichen Zeolithen ein größeres Adsorptionsvermögen auf, d.h. ein Volumenanteil von 2% bis 10% des dem Fugenmaterial 5 enthaltenen künstlichen Molekularsiebes reicht aus, dass das Fugenmaterial 5 weiterhin den bautechnischen Anforderungen genügt und die Schadstoffe, insbesondere Schwermetalle, Kohlenstoffverbindungen etc. effektiv aus den Niederschlagswasserabflüssen ausgefiltert werden können, und zwar beim Versickern über die Fugen 4, 4'.

Das verwendete künstliche Molekularsieb setzt sich über einen Zeitraum von mehreren Jahren zu und verliert dadurch zumindest teilweise an Absorptionsvermögen. Daher ist das Fugenmaterial 5 zumindest im zur Oberfläche 1' des Flächenbelages 1 befindlichen Bereich in regelmäßigen Abständen auszutauschen, wobei die zeitlichen Abstände durchaus ein oder zwei Jahrzehnte umfassen können.

Bevorzugt wird ein aus einem Material mit der Bezeichnung 13X und der chemischen Zusammensetzung Na2O · Al2O3 · 2.5 SiO2 · n H2O hergestelltes künstliches Molekularsieb zur Herstellung des Fugenmaterials 5 verwendet, welches eine Porenweite bzw. einen Porendurchmesser von 10 Å aufweist. Alternativ kann ein aus einem Material mit der Bezeichnung 4A und der chemischen Zusammensetzung Na2O · Al2O3 · 2 SiO2 · n H2O oder ein aus einem Material mit der Bezeichnung 5A und der chemischen Zusammensetzung 0.7 CaO · 0.3 Na2O · Al2O3 · 2 SiO2 · n H2O hergestelltes künstliches Molekularsieb eingesetzt werden. Diese weisen eine Porenweite bzw. einen Porendurchmesser von 4 Å bzw. 5 Å auf.

Das Fugenmaterial 5 wird vorzugsweise in einem Hochleistungs-Zwangsmischer gemischt, und zwar im trockenen Zustand. Zunächst wird der sandartige Materialanteil in den Mischer eingefüllt und bei laufendem Mischer der Feinanteil zugegeben und im Anschluss daran das künstliche Molekularsieb eingemischt. Der Mischungsvorgang beträgt beispielsweise zwischen 3 und 5 Minuten. Das fertige Fugenmaterial 5 wird anschließend in Säcken oder in so genannte "Big-Bags" abgefüllt und ist bis zur Verwendung trocken zu lagern.

Der Volumenanteil des Feinanteils bezogen auf das Gesamtvolumen des Gemisches beträgt beispielsweise zwischen 1 % und 4%, vorzugsweise 2% bis 4%, wobei als Feinanteil vorzugsweise Quarzmehl mit einer Korngröße zwischen 0,001 mm und 0,2 mm Verwendung findet. Der sandartige Materialanteil weist vorzugsweise eine Korngröße zwischen 0,5 mm und 2 mm auf. Vorzugsweise wird als sandartiger Materialanteil Granit verwendet.

Das Fugenmaterial 5 kann beispielsweise aus einem Gemisch aus Granit mit einer Korngröße von 0,5 mm bis 2 mm, Quarzmehl mit einer Korngröße von 0,001 mm bis 0,2 mm und einem künstlichen Molekularsieb mit einer Korngröße von 1,8 mm bis 2,3 mm gebildet sein, wobei der Volumenanteil des Granitanteils beispielsweise 92 %, der Volumenanteil des Quarzmehlanteils 3% und der Volumenanteil des künstlichen Molekularsiebes 5 % jeweils bezogen auf das Gesamtvolumen des Gemisches beträgt.

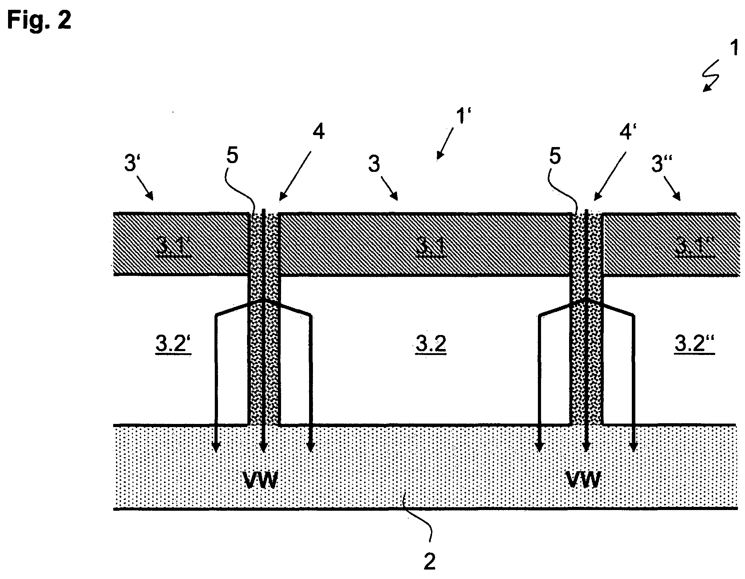

In einer zweiten in Figur 2 dargestellten Ausführungsvariante finden zweischichtige Formsteine 3, 3', 3" zur Herstellung des Flächenbelages 1 Anwendung. Die Formsteine 3, 3', 3" weisen hierbei eine wasserundurchlässige Vorsatzbetonschicht 3.1, 3.1', 3.1" und eine daran anschließende wasserdurchlässige Kernbetonschicht 3.2, 3.2', 3.2" auf, wobei die wasserdurchlässige Kernbetonschicht 3.2, 3.2', 3.2" aus einem haufwerksporigen Beton hergestellt ist. Hierbei findet die Versickerung der Niederschlagswasserabflüsse im Bereich der Oberfläche 1' des Flächenbelages aufgrund der wasserundurchlässige Vorsatzbetonschicht 3.1, 3.1', 3.1" zunächst ausschließlich über die Fugen 4, 4' statt. Erreicht der über die Fugen 4, 4' versickernde Niederschlagswasserabfluss die wasserdurchlässige Kernbetonschicht 3.2, 3.2', 3.2", so kann dieser zusätzlich über die wasserdurchlässige Kernbetonschicht 3.2, 3.2', 3.2" flächig weiter in Richtung der Bettungsschicht 2 abfließen. Die wasserundurchlässige Vorsatzbetonschicht 3.1, 3.1', 3.1" weist beispielsweise eine Dicke zwischen 10 mm und 30 mm, vorzugsweise 20 mm auf, wohingegen die Dicke der wasserdurchlässigen Kernbetonschicht 3.2, 3.2', 3.2" beispielsweise zwischen 50 mm und 80 mm, vorzugsweise 60 mm beträgt. Die Dicke der Bettungsschicht 2 kann beispielsweise zwischen 30 und 50 mm gewählt werden. Durch das Vorsehen einer wasserdurchlässigen Kernbetonschicht 3.2, 3.2', 3.2" ist besonders vorteilhaft ein flächiges Auftreffen des Niederschlagsabflusses auf die Bettungsschicht 2 möglich, so dass die Gefahr eines Verblockens der kompletten Fuge deutlich reduziert wird.

Die Formsteine 3, 3', 3" können an den Längs- und/oder Querseiten Abstandselemente aufweisen, welche annähernd gleichmäßig Breite Fugen 4, 4' mit einer Mindestfugenbreite gewährleisten.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Flächenbelag
- 1': Oberfläche
- 2: Bettungsschicht
- 3, 3', 3": Formsteine
- 3.1, 3.1', 3.1": Vorsatzbetonschicht
- 3.2, 3.2', 3.2": wasserdurchlässige Kernbetonschicht
- 4,4': Fugen
- 5: Fugenmaterial
- VW: Versickerungsweg

## Patentansprüche

1. Flächenbelag (1) umfassend eine Vielzahl von im Verbund auf einer Bettungsschicht (2) verlegten Formsteinen (3, 3', 3") aus Beton, der durch Pflastern erstellt ist, wobei einander benachbarte Formsteine (3, 3', 3") Fugen (4, 4') ausbilden, die mit einem im Wesentlichen sandartigen Fugenmaterial (5) gefüllt sind und einen Versickerungsweg (VW) zum Ableiten von Niederschlagswasserabflüssen von der Oberfläche (1') des Flächenbelages (1) in die Bettungsschicht (2) bilden, wobei das Fugenmaterial (5) eine Filterschicht zur Entfernung von Schadstoffen aus dem Niederschlagswasserabflüssen bildet, **dadurch gekennzeichnet, dass** das Fugenmaterial (5) aus einem Gemisch aus einem sandartigen Anteil, einem Feinanteil und einem künstlichen Molekularsieb besteht, wobei der Volumenanteil des künstlichen Molekularsiebes bezogen auf das Gesamtvolumen des Gemisches zwischen 2% und 10% beträgt.

2. Flächenbelag nach Anspruch 1, **dadurch gekennzeichnet, dass** der Volumenanteil des Feinanteils bezogen auf das Gesamtvolumen des Gemisches zwischen 1% und 4%, vorzugsweise 2% bis 4% beträgt.

3. Flächenbelag nach Anspruch 2, **dadurch gekennzeichnet, dass** als Feinanteil Quarzmehl mit einer Korngröße zwischen 0,001 mm und 0,2 mm vorgesehen ist.

4. Flächenbelag nach einem der Ansprüche 1 bis 3, **dadurch gekennzeichnet, dass** der sandartige Anteil eine Korngröße zwischen 0,5 mm und 2 mm aufweist und/oder dass der sandartige Anteil aus Granit hergestellt ist.

5. Flächenbelag nach einem der Ansprüche 1 bis 4, **dadurch gekennzeichnet, dass** das künstliche Molekularsieb eine Korngröße von 1,8 mm bis 2,3 mm aufweist und/oder dass der Volumenanteil des sandartigen Anteils 92 %, der Volumenanteil des Feinanteils 3% und der Volumenanteil des künstlichen Molekularsiebes 5 % jeweils bezogen auf das Gesamtvolumen des Gemisches beträgt.

6. Flächenbelag nach einem der Ansprüche 1 bis 5, **dadurch gekennzeichnet, dass** das künstliche Molekularsieb einen Porendurchmesser von 4 Ä, 5 Ä oder 10 Å aufweist und/oder dass das künstliche Molekularsieb aus einem Material mit der Bezeichnung 13X und der chemischen Zusammensetzung Na2O · Al2O3 · 2.5 SiO2 · n H2O hergestellt ist.

7. Flächenbelag nach einem der Ansprüche 1 bis 6, **dadurch gekennzeichnet, dass** das künstliche Molekularsieb aus einem Material mit der Bezeichnung 4A und der chemischen Zusammensetzung Na2O · Al2O3 · 2 SiO2 · n H2O oder aus einem Material mit der Bezeichnung 5A und der chemischen Zusammensetzung 0.7 CaO · 0.3 Na2O · Al2O3 · 2 SiO2 · n H2O hergestellt ist.

8. Flächenbelag nach einem der Ansprüche 1 bis 7, **dadurch gekennzeichnet, dass** die Fugen (4, 4') eine Fugenbreite zwischen 4 mm und 8 mm aufweisen und/oder dass die Bettungsschicht (2) gegenüber dem Filtermaterial (5) filterstabil ausgebildet ist.

9. Flächenbelag nach Anspruch 8, **dadurch gekennzeichnet, dass** die Bettungsschicht (2) aus einem Materialgemisch mit einer Korngröße zwischen 0 mm und 5 mm gebildet ist, wobei das Materialgemisch einen Feinanteil mit einer Korngröße von kleiner 0,63 mm aufweist, der bezogen auf das Gesamtvolumen des Materialgemisches einen Volumenanteil von höchstens 3% aufweist.

10. Flächenbelag nach einem der Ansprüche 1 bis 9, **dadurch gekennzeichnet, dass** die Formsteine (3, 3', 3") zweischichtig ausgebildet sind und eine wasserundurchlässige Vorsatzbetonschicht (3.1, 3.1'. ,3.1") und eine daran anschließende wasserdurchlässige Kernbetonschicht (3.2, 3.2', 3.2") aufweisen, wobei die wasserdurchlässige Kernbetonschicht (3.2, 3.2', 3.2") vorzugsweise aus haufwerksporigen Beton hergestellt ist.

11. Fugenmaterial zum Verfugen eines Flächenbelages (1) umfassend eine Vielzahl von im Verbund auf einer Bettungsschicht (2) mit Fugen (4, 4') verlegten Formsteinen (3, 3', 3") aus Beton um eine Filterschicht zur Entfernung von Schadstoffen aus dem Niederschlagswasserabflüssen zu bilden, **gekennzeichnet durch** ein Gemisch aus einem sandartigen Anteil, einem Feinanteil und einem künstlichen Molekularsieb, wobei der Volumenanteil des künstlichen Molekularsiebes bezogen auf das Gesamtvolumen des Gemisches zwischen 2% und 10% beträgt.

12. Fugenmaterial nach Anspruch 11, **dadurch gekennzeichnet, dass** der Volumenanteil des Feinanteils bezogen auf das Gesamtvolumen des Gemisches zwischen 1 % und 4%, vorzugsweise 2% bis 4% beträgt und/oder dass als Feinanteil Quarzmehl mit einer Korngröße zwischen 0,001 mm und 0,2 mm vorgesehen ist.

13. Fugenmaterial nach einem der Ansprüche 11 oder 12, **dadurch gekennzeichnet, dass** der sandartige Anteil eine Korngröße zwischen 0,5 mm und 2 mm aufweist und/oder dass das sandartige Anteil Granit ist und/oder dass das künstliche Molekularsieb eine Korngröße von 1,8 mm bis 2,3 mm aufweist.

14. Fugenmaterial nach einem der Ansprüche 11 bis 13, **dadurch gekennzeichnet, dass** der Volumenanteil des sandartigen Anteils 92 %, der Volumenanteil des Feinanteils 3 % und der Volumenanteil des künstlichen Molekularsiebes 5 % jeweils bezogen auf das Gesamtvolumen des Gemisches beträgt und/oder dass das künstliche Molekularsieb einen Porendurchmesser von 4 Å, 5 Ä oder 10 Ä aufweist und/oder dass das künstliche Molekularsieb aus einem Material mit der Bezeichnung 13X und der chemischen Zusammensetzung Na2O · Al2O3 · 2.5 SiO2 · n H2O hergestellt ist.

15. Fugenmaterial nach einem der Ansprüche 11 bis 14, **dadurch gekennzeichnet, dass** das künstliche Molekularsieb aus einem Material mit der Bezeichnung 4A und der chemischen Zusammensetzung Na2O · Al2O3 · 2 SiO2 · n H2O hergestellt ist und/oder dass das künstliche Molekularsieb aus einem Material mit der Bezeichnung 5A und der chemischen Zusammensetzung 0.7 CaO · 0.3 Na2O · - Al2O3 · 2 SiO2 · n H2O hergestellt ist und/oder dass das Fugenmaterial (5) durch Mischen in einem Hochleistungs-Zwangsmischer hergestellt wird, und zwar im trockenen Zustand.

## Claims

1. Surface covering (1), comprising a plurality of concrete moulded blocks (3, 3', 3") laid together in a pattern on a bedding layer (2), which is produced by paving, wherein adjoining moulded blocks (3, 3', 3") form joints (4, 4') which are filled with an essentially sand-like joint material (5) and form seepage paths (VW) for draining off precipitation water flows from the surface (1') of the surface covering (1) into the bedding layer (2), wherein the joint material (5) forms a filter layer for removing harmful substances from the precipitation water flows, **characterised in that** the joint material (5) consists of a mixture of a sand-like portion, a fines portion and an artificial molecular sieve, wherein the volumetric proportion of the artificial molecular sieve in relation to the overall volume of the mixture is between 2% and 10%.

2. Surface covering according to claim 1 **characterised in that** the volumetric proportion of the fines portion in relation to the overall volume of the mixture is between 1% and 4%, preferably 2% to 4%.

3. Surface covering according to claim 2 **characterised in that** quartz powder with a particle size of between 0.001 mm and 0.2 mm is provided as the fines portion.

4. Surface covering according to any one of claims 1 to 3 **characterised in that** the sand-like portion comprises a particle size of between 0.5 mm and 2 mm and/or that the sand-like portion is produced from granite.

5. Surface covering according to any one of claims 1 to 4 **characterised in that** the artificial molecular sieve has a particle size of 1.8 mm to 2.3 mm and/or that the volumetric proportion of the sand-like portion is 92%, the volumetric proportion of the fines portion is 3% and the volumetric proportion of the artificial sieve is 5% each in relation to the overall volume of the mixture.

6. Surface covering according to any one of claims 1 to 5 **characterised in that** the artificial sieve has a pore diameter of 4 Å, 5 Å, or 10 Å, and/or that the artificial molecular sieve is made of a material with the designation 13X and the chemical composition Na₂O · Al₂O₃ · 2.5 SiO₂ · nH₂O.

7. Surface covering according to any one of claims 1 to 6 **characterised in that** the artificial molecular sieve is made of a material with the designation 4A and the chemical composition Na₂O · Al₂O₃ · 2SiO₂ · nH₂O or of a material with the designation 5A and the chemical composition 0.7 CaO · 0.3 Na₂O · Al₂O₃ · 2SiO₂ · nH₂O.

8. Surface covering according to any one of claims 1 to 7 **characterised in that** the joints (4, 4') have a joint width of between 4 mm and 8 mm and/or that the bedding layer (2) is filter-stable against the filter material (5).

9. Surface covering according to claim 8 **characterised in that** the bedding layer (2) is made of a material mixture with a particle size of between 0 mm and 5 mm, wherein the filter mixture has a fines portion with a particle size of less than 0.63 mm, which in relation to the overall volume of the material mixture exhibits a volumetric proportion of at most 3%.

10. Surface covering according to any one of claims 1 to 9 **characterised in that** the moulded blocks (3, 3', 3") are designed in two layers and have a water-impermeable concrete covering layer (3.1, 3.1', 3.1") and adjoining thereto a water-permeable concrete core layer (3.2, 3.2', 3.2"), wherein the water-permeable concrete core layer (3.2, 3.2', 3.2") is preferably made of porous concrete.

11. Joint material for jointing a surface covering (1) comprising a plurality of concrete moulded blocks (3, 3', 3") laid together in a pattern with joints (4, 4') on a bedding layer (2) in order to create a filter layer for removing harmful substances from precipitation water flows, **characterised by** a mixture of a sand-like portion, a fines portion and an artificial molecular sieve, wherein the volumetric proportion of the artificial molecular sieve in relation to the overall volume of the mixture is between 2% and 10%.

12. Joint material according to claim 11 **characterised in that** the volumetric proportion of the fines portion in relation to the overall volume of the mixture is between 1% and 4%, preferably 2% to 4% and/or that quartz powder with a particle size of between 0.001 mm and 0.2 mm is provided as the fines portion.

13. Joint material according to any one of claims 11 or 12 **characterised in that** the sand-like portion has a particle size of between 0.5 mm and 2 mm and/or that the sand-like portion is granite and/or that the artificial molecular sieve has a particle size of 1.8 mm to 2.3 mm.

14. Joint material according to any one of claims 11 to 13 **characterised in that** the volumetric proportion of the sand-like portion is 92%, the volumetric proportion of the fines portion is 3% and the volumetric proportion of the artificial sieve is 5% each in relation to the overall volume of the mixture and/or **in that** the molecular sieve has a pore diameter of 4 Å, 5 Å, or 10 Å, and/or **in that** the molecular sieve is made of a material with the designation 13 X and the chemical composition Na2O · Al₂O₃ · 2.5 SiO₂ · nH₂O.

15. Joint material according to any one of claims 11 to 14 **characterised in that** the artificial molecular sieve is made of a material with the designation 4A and the chemical composition Na₂O · Al₂O₃ · 2SiO₂ · nH20 and/or **in that** the artificial sieve is made of a material with the designation 5A and the chemical composition 0.7 CaO · 0.3 Na₂O · Al₂O₃ · 2SiO₂ · nH₂O and/or **in that** the joint material (5) is produced by mixing in a high-performance compulsory mixer and, in particular, in the dry state.

## Revendications

1. Revêtement superficiel (1) constitué par pavage, comprenant une pluralité de pièces moulées (3, 3', 3") en béton posées à joint décalé sur un lit de pose (2), des pièces moulées (3, 3', 3") voisines les unes des autres formant des joints (4, 4') qui sont remplis d'une matière à joints (5) sensiblement sableuse et forment un trajet d'infiltration (VW) pour évacuer des écoulements d'eau pluviale de la surface (1') du revêtement superficiel (1) dans le lit de pose (2), la matière des joints (5) formant une couche de filtration destinée à retirer des polluants des écoulements d'eau pluviale,
**caractérisé en ce que** la matière à joints (5) est constituée d'un mélange d'une fraction sableuse, d'une fraction fine et d'un tamis moléculaire artificiel, la part en volume du tamis moléculaire artificiel s'élevant à de 2 % à 10 % en rapport au volume total du mélange.

2. Revêtement superficiel selon la revendication 1, **caractérisé en ce que** la part en volume de la fraction fine s'élève à de 1 % à 4 %, de préférence à de 2 % à 4 % en rapport au volume total du mélange.

3. Revêtement superficiel selon la revendication 2, **caractérisé en ce qu'**en tant que fraction fine, il est prévu une poudre de quartz d'une grosseur de grains comprise entre 0,001 mm et 0,2 mm.

4. Revêtement superficiel selon l'une quelconque des revendications 1 à 3, **caractérisé en ce que** la fraction sableuse présente une grosseur de grains comprise entre 0,5 mm et 2 mm et/ou **en ce que** la fraction sableuse est fabriquée en granit.

5. Revêtement superficiel selon l'une quelconque des revendications 1 à 4, **caractérisé en ce que** le tamis moléculaire artificiel présente une grosseur de grains de 1,8 mm à 2,3 mm et/ou **en ce que** la part en volume de la fraction sableuse s'élève à 92 %, la part en volume de la fraction fine s'élève à 3 % et la part en volume du tamis moléculaire artificiel s'élève à 5 %,chaque fois en rapport au volume total du mélange.

6. Revêtement superficiel selon l'une quelconque des revendications 1 à 5, **caractérisé en ce que** le tamis moléculaire artificiel présente un diamètre de pores de 4 À, 5 À ou 10 À et/ou **en ce que** le tamis moléculaire artificiel est fabriqué dans une matière portant la dénomination 13 X et présentant la composition chimique Na2O · Al2O3 · 2.5 SiO2 · n H2O.

7. Revêtement superficiel selon l'une quelconque des revendications 1 à 6, **caractérisé en ce que** le tamis moléculaire artificiel est fabriqué dans une matière portant la dénomination 4A et présentant la composition chimique Na2O · Al2O3 · 2 SiO2 · n H2O ou dans une matière portant la dénomination 5A et présentant la composition chimique 0.7 CaO · 0.3 Na2O · Al2O3 · 2 SiO2 · n H2O.

8. Revêtement superficiel selon l'une quelconque des revendications 1 à 7, **caractérisé en ce que** les joints (4, 4') présentent une largeur de joints comprise entre 4 mm et 8 mm et/ou **en ce que** le lit de pose (2) est conçu en étant stable à la filtration par rapport à la matière de filtration (5).

9. Revêtement superficiel selon la revendication 8, **caractérisé en ce que** le lit de pose (2) est formé en un mélange de matières avec une grosseur de grains comprise entre 0 mm et 5 mm, le mélange de matières comportant une fraction fine avec une grosseur de grains inférieure à 0, 63 mm, qui en rapport au volume total du mélange de matières présente une part en volume d'un maximum de 3 %.

10. Revêtement superficiel selon l'une quelconque des revendications 1 à 9, **caractérisé en ce que** les pièces moulées (3, 3', 3") sont conçues en bicouches et comportent une couche en béton de parement (3.1, 3.1', 3.1") imperméable à l'eau et une couche en béton de coeur (3.2, 3.2', 3.2") perméable à l'eau qui s'y raccorde, la couche en béton de coeur (3.2, 3.2', 3.2") perméable à l'eau étant fabriquée de préférence en béton à texture caverneuse.

11. Matière à joints destinée à jointoyer un revêtement superficiel (1) comprenant une pluralité de pièces moulées (3, 3', 3") en béton posées à joint décalé sur un lit de pose (2) avec des joints (4, 4'), pour former une couche de filtration destinée à retirer des polluants des écoulements d'eau pluviale,
**caractérisée par** un mélange d'une fraction sableuse, d'une fraction fine et d'un tamis moléculaire artificiel, la part en volume du tamis moléculaire artificiel s'élevant à de 2 % à 10 % en rapport au volume total du mélange.

12. Matière à joints selon la revendication 11, **caractérisée en ce que** la part en volume de la fraction fine s'élève à de 1 % à 4 %, de préférence à de 2 % à 4 % en rapport au volume total du mélange ou **en ce qu'**en tant que fraction fine, il est prévu une poudre de quartz d'une grosseur de grains comprise entre 0,001 mm et 0,2 mm.

13. Matière à joints selon l'une quelconque des revendications 11 ou 12, **caractérisée en ce que** la fraction sableuse présente une grosseur de grains comprise entre 0,5 mm et 2 mm et/ou **en ce que** la fraction sableuse est du granit et/ou **en ce que** le tamis moléculaire artificiel présente une grosseur de grains de 1,8 mm à 2,3 mm.

14. Matière à joints selon l'une quelconque des revendications 11 à 13, **caractérisée en ce que** la part en volume de la fraction sableuse s'élève à 92 %, la part en volume de la fraction fine s'élève à 3 % et la part en volume du tamis moléculaire artificiel s'élève à 5 %, chaque fois en rapport au volume total du mélange et/ou **en ce que** le tamis moléculaire artificiel présente un diamètre de pores de 4 À, 5 À ou 10 À et/ou en ce que le tamis moléculaire artificiel est fabriqué dans une matière portant la dénomination 13 X et présentant la composition chimique Na2O · Al2O3 · 2.5 SiO2 · n H2O.

15. Matière à joints selon l'une quelconque des revendications 11 à 14, **caractérisée en ce que** le tamis moléculaire artificiel est fabriqué dans une matière portant la dénomination 4A et présentant la composition chimique Na2O · Al2O3 · 2 SiO2 · n H2O et/ou **en ce que** la tamis moléculaire artificiel est fabriqué dans une matière portant la dénomination 5A et présentant la composition chimique 0.7 CaO · 0.3 Na2O · Al2O3 · 2 SiO2 · n H2O et/ou **en ce qu'**on fabrique la matière à joints (5) par mélange dans un malaxeur à mélange forcé haute performance, à savoir à l'état sec.
